# EUROPÄISCHE PATENTANMELDUNG

(11) **EP 0 615 930 A2**
(43) Veröffentlichungstag der Anmeldung: **21.09.1994**
(21) Anmeldenummer: 94103662.6
(22) Anmeldetag: 10.03.1994
(51) Int. Cl.: B65G 47/14

(54) **Vorrichtung zum Ausrichten von ungeordnet zugeführten Körpern**

(30) Priorität: 16.03.1993 DE 4308316
(71) Anmelder: Werner Kammann Maschinenfabrik GmbH., D-32257 Bünde (DE)
(72) Erfinder: Rohwetter, Norbert, D-32257 Bünde (DE); Monka, Jürgen, D-32257 Bünde (DE)
(74) Vertreter: Koepsell, Helmut, Dipl.-Ing.

(57) **Zusammenfassung**

Die Vorrichtung zum Ausrichten von ungeordnet zugeführten Körpern weist eine Trommel auf, die unterseitig durch einen Boden begrenzt ist, der aus wenigstens zwei übereinander angeordneten Scheiben oder Ringscheiben besteht, wobei der Außendurchmesser einer Scheibe oder Ringscheibe jeweils größer ist als der Außendurchmesser der unmittelbar darunter befindlichen Scheibe oder Ringscheibe. Die zuunterst befindliche Scheibe oder Ringscheibe bildet die untere Begrenzung einer Rinne, deren innenseitige Begrenzung durch den Umfang der darüber befindlichen Scheibe oder Ringscheibe gebildet wird. Der Boden der Trommel ist stufenförmig ausgebildet. Die Ausrichtung der Körper erfolgt bei deren Eintreten in die Rinne, innerhalb derer die Körper dann in Reihe hintereinanderliegend vortransportiert und schließlich aus der Trommel herausgeführt werden.

## Beschreibung

Die Erfindung betrifft eine Vorrichtung zum Ausrichten von ungeordnet zugeführten Körpern gemäß dem Oberbegriff des Anspruches 1.

Bei diesen Körpern handelt es sich insbesondere um Hohlkörper aus Kunststoff, z.B. Flaschen oder Becher, die so zu ordnen und auszurichten sind, daß sie in einer Reihe hintereinander liegend aus der Vorrichtung herausgeführt werden. Dabei ist die Anordnung der Körper bezüglich der Lage ihrer Enden relativ zur Förderrrichtung zufällig, so daß in der Mehrzahl der Fälle noch eine zusätzliche Ausrichtung erfolgt, bei welcher jene Körper, die für anschließende Handhabungen und Behandlungen ungeeignete Positionen einnehmen, verschwenkt werden, so daß danach alle in einer Reihe transportierten Körper eine einheitliche Position auch bezüglich der Lage ihrer Enden einnehmen.

Vorrichtungen zum Ausrichten von ungeordnet zugeführten Körpern müssen an die Abmessungen und die Gestalt der jeweils durchzusetzenden Körper angepaßt sein. Bekannte Vorrichtungen weisen den Nachteil auf, daß sie dazu Formteile, also irgendwelche Bauelemente verwenden, die bei einem Wechsel von einer Serie von Körpern zur einer Serie von Körpern mit anderer Gestalt und/oder anderen Dimensionen ausgetauscht oder in zeitaufwendige Arbeit eingestellt werden müssen. Dies führt zu einer erheblichen Reduzierung der Produktivität solcher Vorrichtungen. Außerdem ist ihre Durchsatzleistung in vielen Fällen ohnehin verhältnismäßig niedrig.

Demzufolge liegt der Erfindung die Aufgabe zugrunde, eine Vorrichtung der einleitend beschriebenen Art so auszugestalten, daß die Nachteile bekannter Vorrichtungen vermieden werden. Die Vorrichtung soll sich durch einen einfachen Aufbau auszeichnen und auf einfache Weise und ohne großen Zeitaufwand an die jeweils durchzusetzenden Körper angepaßt werden können. Trotzdem soll die Vorrichtung eine hohe Duchsatzleistung ermöglichen und dabei eine schonende Behandlung der Körper innerhalb der Vorrichtung gewährleisten. Der Platzbedarf der Vorrichtung soll klein sein. Falls der Vorrichtung eine Handhabungseinrichtung nachgeschaltet ist, in welcher falsch positionierte Körper gewendet werden, soll letzteres ebenfalls schnell und störungsfrei durchführbar sein, um auch in dieser Handhabungseinrichtung eine entsprechend große Durchsatzleistung zu erzielen.

Eine mit den Merkmalen des Kennzeichens des Anspruches 1 versehene Vorrichtung zeichnet sich insbesondere durch einen einfachen Aufbau und eine hohe Durchsatzleistung aus. Die Anordnung von wenigstens zwei Scheiben oder Ringscheiben übereinander derart, daß zwischen den die Körper tragenden Oberflächen beider Scheiben oder Ringscheiben ein Niveauunterschied besteht, der die Bildung einer Stufe zur Folge hat, führt im Zuge der Bewegung eines Körpers in Richtung auf die äußere Wandung bzw. die von letzterer außenseitig begrenzte Rinne zu einer Position des Körpers, die bei Erreichen der Rinne, insbesondere beim Auftreffen auf die äußere Wandung, eine Ausrichtung des Körpers begünstigt, bei welcher er ohne große Probleme in die Rinne gelangt. Dadurch wird einmal die Durchsatzleistung der Vorrichtung gesteigert. Ein weiterer Vorteil besteht darin, daß die Geräuschentwicklung innerhalb der Vorrichtung relativ gering ist.

Gemäß einem weiteren Vorschlag der Erfindung können auch drei, ggf. sogar mehr Scheiben oder Ringscheiben stufenförmig übereinander angeordnete sein, so daß der Boden der Trommel von innen nach außen eine Art Kaskade bildet, über die Körper nach außen in den Bereich der Rinne gelangen. Die Praxis hat gezeigt, daß in der Mehrzahl der Fälle mit insgesamt drei übereinander angeordneten Scheiben oder Ringscheiben optimale Ergebnisse erzielt werden können.

Da der Umfang der oberhalb der unteren Scheibe oder Ringscheibe angeordneten zweiten Scheibe oder Ringscheibe die innere Begrenzung der Rinne bildet, ist es durch vertikale Einstellung dieser zweiten Scheibe bzw. Ringscheibe auf einfache Weise möglich, die Tiefe der Rinne an die jeweils durchzusetzenden Körper anzupassen. Die radiale Breite der Rinne kann durch entsprechende Einstellung der Trommelwandung an die jeweiligen Körper angepaßt werden, wobei dazu die Wandung in den in Betracht kommenden Umfangsbereichen unterteilt ist.

In der Zeichnung ist ein Ausführungsbeispiel der Erfindung im Schema dargestellt. Es zeigen:
Fig. 1 die Draufsicht einer Vorrichtung zum Ausrichten von ungeordnet zugeführten Körpern,
Fig. 2 die dazugehörige Seitenansicht,
Fig. 3 eine Ansicht in Richtung der Pfeile 111-111 der Fig. 1,
Fig. 4 eine Ansicht in Richtung der Pfeile IV-IV der Fig. 1,
Fig. 5 eine Ansicht in Richtung der Pfeile V-V der Fig. 1,
Fig. 6 einen Schnitt entsprechend etwa dem der Fig. 3, der zusätzliche Teile der Vorrichtung zeigt,
Fig. 7 das Schema einer zweiten Ausführungsform in Draufsicht.

Bei dem in der Zeichnung dargestellten Ausführungsbeispiel ist eine im wesentlichen runde Trommel 10, die außenseitig über den größten Teil des Umfangs durch eine vertikale Wandung 12 begrenzt ist, mit drei Ringscheiben 14, 22, 24 versehen, die koaxial und übereinander angeordnet sind und den Boden der Trommel 10 bilden. Diese Ringscheiben 14, 22, 24 sind um eine gemeinsame vertikale Achse, unabhängig voneinander rotierbar, angebracht. Die Außendurchmesser der Ringscheiben 14, 22, 24 nehmen von unten nach oben ab. Die zuunterst befindliche erste Ringscheibe 14, die von einer rotierbar gelagerten, radförmigen Halterung 16 getragen wird, bildet den Boden einer Rinne 18, die sich über den größten Teil des Umfangs der Trommel 10 innerhalb derselben erstreckt und außenseitig überwiegend von Wandteilen 19 der Wandung 12 und innenseitig überwiegend von einem flanschartigen Fortsatz 20 der zweiten Ringscheibe 22 begrenzt ist. Der äußere Randbereich 23 der zweiten Ringscheibe 22, an den sich der flanschartige Fortsatz 20 anschließt, ist nach außen geneigt angeordnet.

Oberhalb der mittleren Ringscheibe 22 ist eine weitere, dritte Ringscheibe 24 angeordnet, deren äußerer Randbereich 25 ebenfalls nach außen geneigt verläuft und mit einem nach unten weisenden flanschartigen umlaufenden Fortsatz 26 versehen ist, so daß auch eine Stufe zwischen dritter und zweiter Ringscheibe 24 bzw. 22 vorhanden ist. Die dritte Ringscheibe 24 überlappt mit ihrem äußeren Umfangsbereich den inneren Umfangsbereich der zweiten Ringscheibe 22, wobei der flanschartige Fortsatz 26 kurz oberhalb der Ringscheibe 22 endend die Stufe bildet.

Die drei Ringscheiben 14, 22, 24 rotieren um die gemeinsame Achse in derselben Richtung 27, jedoch mit unterschiedlichen Geschwindigkeiten derart, daß die Rotationsgeschwindigkeit von unten nach oben zunimmt, wobei die Ringscheibe 14 eine merklich geringere Rotationsgeschwindigkeit aufweist.

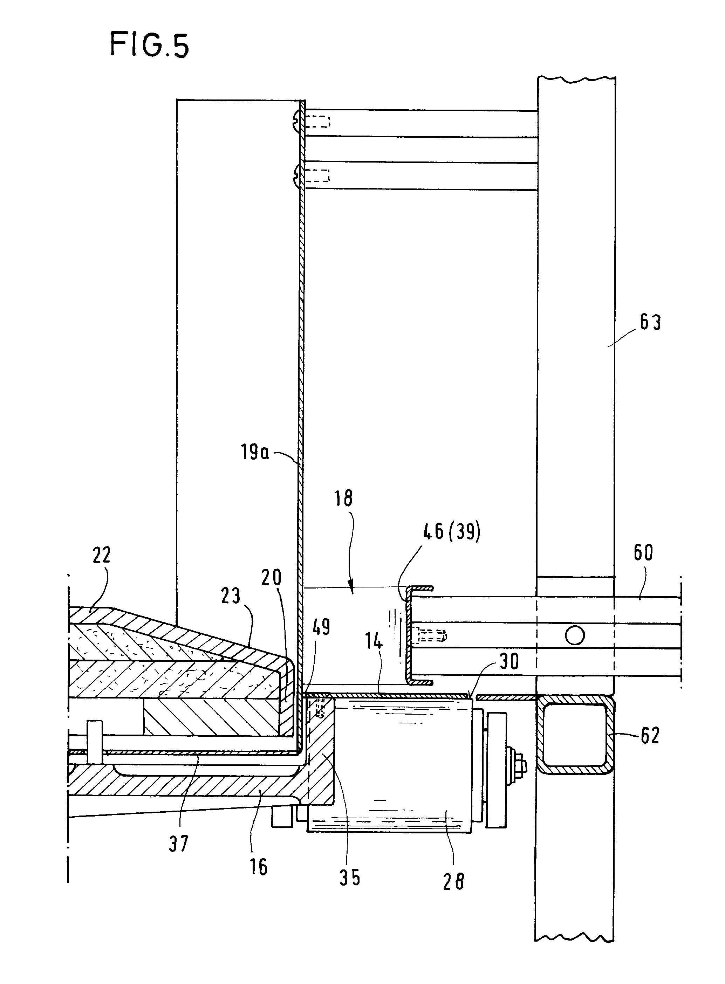

Die Rinne 18 dient in noch zu beschreibender Weise dazu, die der Trommel 10 ungeordnet zugeführten Körper derart auszurichten, daß sie innerhalb der Rinne 18 beim Verlassen der Trommel in einer Reihe hintereinander angeordnet sind und so aus der Trommel 10 herausgeführt werden. Dazu ist der Trommel 10 ein Förderband 28 nachgeschaltet, dessen oberer Abschnitt 30 im wesentlichen tangential zur Rinne 18 verlaufend die in dieser liegend herantransportierten Körper 32 aufnimmt. Insbesondere Fig. 5 läßt die Zuordnung des Förderbandes 28 bzw. des oberen Abschnittes 30 desselben zur Rinne 18 und zu der letztere unten begrenzenden ersten Ringscheibe 14 erkennen.

Die Herstellung der Verbindung zwischen Rinne 18 und dem nachgeschalteten Förderband 28 erfolgt in der Weise, daß in Rotationsrichtung 27 unmittelbar hinter einer oberhalb der Rinne 18 angeordneten Abstreifereinrichtung 34 ein Wandungsteil 19a der Wandung 12 beginnt, welches die Rinne 18 in dem Umfangsbereich zwischen Abstreifereinrichtung 34 und einem Punkt, an welchem das an die Rinne anschließende Förderband 28 sich außerhalb der Bewegungsbahn des durch die erste Ringscheibe 14 gebildeten Bodens der Rinne 18 befindet, gegenüber dem Inneren der Trommel 10 abschirmt und entlang dem äußeren Umfang der zweiten Ringscheibe 22 zwischen dieser und der inneren Begrenzung 49 der ersten Ringscheibe 14 verläuft und in dem Bereich in Rotationsrichtung 27 hinter der Abstreifereinrichtung 34 verhindert, daß innerhalb der Trommel befindlichen Körper, die aufgrund der von den Ringscheiben 22 und 24 ausgeführten Rotationsbewegungen nach außen geschleudert werden, in den außerhalb der Trommel 10 befindlichen Abschnitt der Rinne 18 und den Übergang zum anschließenden Förderband 28 gelangen. Auf diese Weise ist sichergestelt, daß immer nur eine Lage von Körpern, die in einer Reihe angeordnet sind, von der Rinne 18 dem oberen Abschnitt 30 des Förderbandes 28 zugeführt wird. Insbesondere Fig. 5 läßt erkennen, daß das stationäre und nicht verstellbare Wandteil 19a, welches die Rinne 18 innenseitig begrenzt, von einer stationären Platte 37 getragen wird, die an einer zentralen Stütze angebracht ist, die die Welle für den Antrieb Scheibe 22 umgibt..

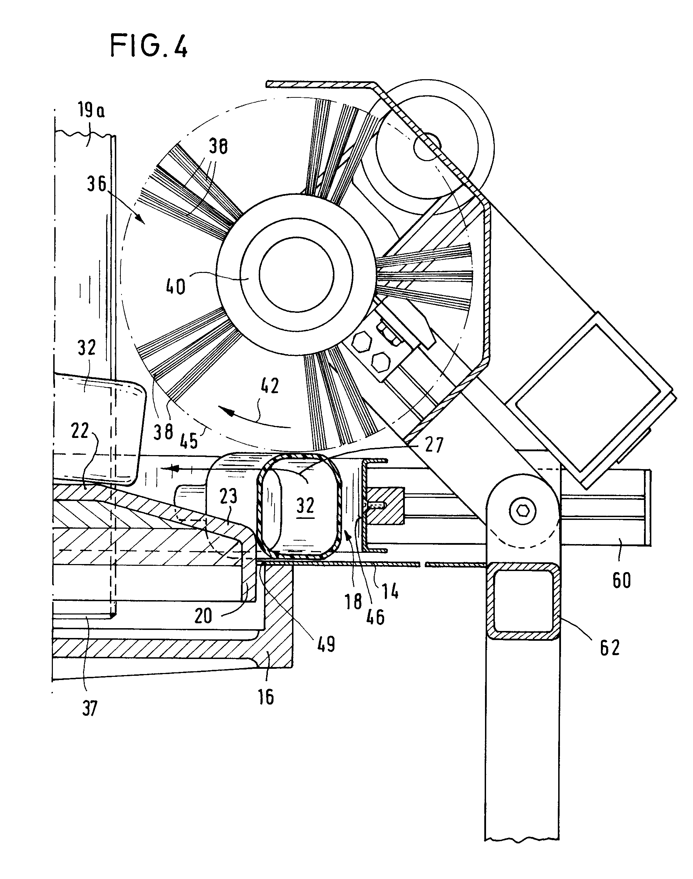

An dem der Abstreifereinrichtung 34 abgekehrten Ende 48 des Wandungsteiles 19a schließt ein nahezu radiales Wandungsteil 19b an, welches im wesentlichen quer zur ersten Ringscheibe 14 verläuft und die Verbindung mit dem angrenzenden Wandungsteil 19, welches die Rinne 18 wieder außenseitig begrenzt, herstellt. Somit befindet sich die Rinne 18 vom Punkt 48 in Rotationsrichtung 27 bis unmittelbar hinter der Abstreifereinrichtung 34, d.h. bis zum Beginn des Wandungsteiles 19a, innerhalb der Trommel 10, wobei sie außenseitig von den Wandungsteilen 19 der Wandung 12 und im Bereich der Abstreifereinrichtung 34 von einer Führungsleiste 46 (Fig. 4) begrenzt ist. Diese Führungsleiste 46 setzt sich dann in Transportrichtung 27 hinter der Abstreifereinrichtung 34 in Richtung auf das Förderband 28 fort, wo sich die außenseitige Führungsleiste 39 des oberen Abschnittes 30 des Förderbandes 28 anschließt. Die innenseitige Begrenzung der an die Rinne 18 in Richtung des Förderbands 28 anschließenden Transportbahn 41 wird von einer Führungswand 43 gebildet, die sich zwischen Wandungsteil 19a und dem Quer-Wandungsteil 19b erstreckt. An diese Führungswand schließt sich eine dem oberen Abschnitt 30 des Förderbandes 28 zugeordnete Führungsleiste 47 an.

Die etwa 45 _{°} im Bogenmaß vor - bezogen auf die Rotationsrichtung 27 der Ringscheiben - dem Übergang von Rinne 18 zum Förderband 28 oberhalb der Rinne 18 angeordnete Abstreifereinrichtung 34 weist eine rotierende Bürste 36 auf. Die die Borsten 38 tragende Welle 40 verläuft etwa tangential zur Rinne 18 in einem derartigen Abstand von der Ringscheibe 14, daß der untere Scheitelpunkt der von den freien Enden der Borsten beschriebenen Kreisbahn 45 sich kurz oberhalb eines in der Rinne 14 liegenden Körpers 32 befindet (Fig. 4). Die vorbeschriebene Anordnung der Teile hat zur Folge, daß durch die in Richtung des Pfeiles 42 rotierende Bürste 36 Körper, die im Bereich der Rinne 18 oberhalb und/oder auf einem in der Rinne befindlichen Körper liegen, im Zuge des Vortransports durch die Ringscheibe 14 und ggf. auch durch die zweite Ringscheibe 22 von der rotierenden Bürste 18 erfaßt werden, sobald sie in deren Bewegungsbereich gelangen, und nach innen, also im wesentlichen auf die zweite Ringscheibe 22 geschoben werden, so daß nach Passieren der Abstreifereinrichtung 34 im Bereich der Rinne 18 immmer nur eine Lage von in einer Reihe hintereinander angeordneten Körpern vorhanden ist und demzufolge auch nur eine Lage von Körpern in den Bereich der Rinne 18 gelangen kann, der sich in Rotationsrichtung der Ringscheibe 14 hinter der Abstreifereinrichtung 34 außerhalb der Trommel 10 befindet. Da das Wandungsteil 19a verhindert, daß in Transportrichtung hinter der Abstreifereinrichtung 34 bis zum Ende 48 des Wandungsteiles 19a Körper aus der Trommel 10 wieder in den Bereich der Rinne 18 und die daran anschließende Transportbahn 41 gelangen, werden die Körper in Reihe hintereinander in einer Lage dem anschließenden Transportband zugeführt.

Wie genau die Umlaufbahn der Borsten 38 der Bürste 36 zu den in der Rinne analog Körper 32 der Fig. 4 befindlichen Körpern 32 angeordnet wird, hängt von den jeweiligen Gegebenheiten ab. So ist es denkbar, daß die Borsten 38 noch mit dem in der Rinne 18 befindlichen Körper in Berührung kommen. Auch die Höhe der inneren Begrenzung der Rinne 18 durch die Ringscheibe 22 kann dabei eine Rolle spielen. Entscheidend ist lediglich, daß eine ggf. auf den Körper 32 übertragene Kraft nicht ausreicht, den Körper aus der Rinne heraus in das Innere der Trommel 10 zu schleudern.

Da die auszurichtenden Körper in einer Reihe an den Bandförderer 28 übergeben werden sollen, ist es zusätzlich zu den bereits beschriebenen Maßnahmen erforderlich, auch dafür zu sorgen, daß in der Rinne 18 über deren Breite jeweils nur ein Körper 32 vorhanden ist. Dies bedeutet, daß die Rinne 18 eine Breite, also eine radiale Erstreckung aufweist, die lediglich Platz für die Aufnahme eines Körpers 32 bietet, wobei es bei einem Körper mit nicht-zylindrischem Querschnitt erforderlich ist, die Breite, also die radiale Erstreckung der Rinne 18, der geringsten Querschnittserstreckung des Körpers anzupassen, so daß dieser nur etwa hochkant von der Rinne aufgenommen werden kann, wie dies in Figur 4 dargestellt ist.

Ferner ist es erforderlich, die Tiefe der Rinne 18, also die Höhe der seitlichen Begrenzung durch den Umfangsflansch 20 der zweiten Ringscheibe 22, so zu wählen, daß der Querschnitt der Rinne durch einen darin befindlichen Körper in solchem Maße ausgefüllt ist, daß ein zweiter Körper neben dem auf der Ringscheibe 14 aufliegenden ersten Körper innerhalb der Rinne keinen Platz mehr findet bzw., wenn er auf dem ersten Körper aufliegt, vom Abstreiferelement 34 ohne weiteres nach innen, also in Richtung auf die Mitte der Trommel 10 verschoben werden kann. Im allgemeinen ist es nicht erforderlich, daß die Tiefe der Rinne 18 etwa gleich der maximalen vertikalen Erstreckung des Querschnittes des Körpers 32 ist. Fig. 4 läßt vielmehr erkennen, daß es ausreicht, die innenseitige Begrenzung der Rinne 18 durch die zweite Scheibe 22 bzw. deren flanschförmigen Fortsatz 20 so zu wählen, daß die Umfangsbegrenzung der Scheibe 22 bzw. des Flansches 20 als eine Art Anschlag wirkt, der den Körper 32 innerhalb der Rinne 18 auch unter der Einwirkung irgendwelcher ggf. durch die Abstreifereinrichtung 34 übertragenen Kräfte hält. Die Tiefe der Rinne und die Einstellung der Bürste 36 hängen weitgehend von den Querschnittsformen der jeweils zu behandelnden Körper ab. Die optimalen Einstellungen können durch einfache Versuche festgestellt werden.

Da die Vorrichtung gemäß der Erfindung - jedenfalls innerhalb eines bestimmten Bereiches - für Körper unterschiedlicher Abmessungen und Formen einsetzbar sein soll, ist sie so ausgebildet, daß sie in kurzer Zeit durch bloßes Verstellen einiger Teile der Vorrichtung an die jeweils auszurichtenden Körper angepasst werden kann.

Die Anpassung der radialen Breite der Rinne 18 an Form und Dimensionen der Körper erfolgt über eine entsprechende Einstellung der Wandungsteile 19 und der Führungsleiste 46 (Fig. 4). Dazu ist die Wandung 12 der Trommel 10 in dem Bereich, in welchem die Rinne 18 innerhalb der Trommel liegt, beispielsweise in sechs Wandungsteile 19 unterteilt, zu denen noch die Führungsleiste 46 (Fig. 4) kommt. Diese Wandungsteile und die Führungsleiste 46 werden zwecks Einstellung der radialen Breite der Rinne 18 in Richtung auf den Mittelpunkt der Trommel 10 oder entgegengesetzt dazu verschoben und in einer Position fixiert, welche der jeweils gewünschten Rinnenbreite entspricht. Die einzelnen Wandungsteile 19 und die Führungsleiste 46 werden jeweils von im wesentlichen radial zur Trommel 10 angeordneten Profilabschnitten 60 getragen, die radial verschiebbar am Maschinenrahmen 62 gelagert sind. Dabei sind Klemmmittel vorgesehen, durch welche die Profilschienen in ihrer jeweiligen Betriebslage am Maschinenrahmen festgeklemmt werden können. Diese Anordnung hat zur Folge, daß ein Verschieben eines Wandungsteiles 19 oder der Führungsleiste 46 durch entsprechende radiale Verstellung des zugehörigen Profilabschnittes 60 nicht über die gesamte Länge des Wandungsteiles 19 in Rotationsrichtung 27 zu einer einheitlichen Änderung der Breite der Rinne 18 führt, da eine genau radiale Verschiebung lediglich im Bereich des jeweiligen Profilabschnittes 60 erfolgt. In den anderen Bereichen des Wandungsteiles weicht das Ausmaß der Änderung der Breite der Rinne 18 ab von dem Ausmaß der Änderung im Bereich des jeweiligen Profilabschnittes 60, wobei diese Abweichung mit zunehmender Entfernung von diesem Profilabschnitt 60, der das jeweilige Wandteil trägt, zunimmt. Diese Ungenauigkeiten sind jedoch in der Praxis ohne Bedeutung, da ein Vorteil der Vorrichtung gemäß der Erfindung gerade darin besteht, daß an die Genauigkeit der Einstellung der Teile keine allzu großen Anforderungen gestellt zu werden brauchen. Entscheidend ist lediglich, daß die Körper ungehindert in die Rinne gelangen können, wobei sie dabei selbsttätig mit ihrem Querschnitt die richtige Lage innerhalb der Rinneeinnehmen, und daß die Körper innerhalb der Rinne zwar geführt werden, sich jedoch relativ zu sämtlichen die Rinne begrenzenden Elementen frei bewegen können. Die Wandungsteile 19 sind so angeordnet, daß sie in Rotationsrichtung 27 einander etwas überlappen, wobei das in Rotationsrichtung 27 jeweils folgende Wandungsteil das jeweils vorhergehende Wandungsteil außenseitig überlappt. Auf diese Weise wird die Bildung von Vorsprüngen und Kanten, die die Bewegung der Körper innerhalb der Rinne 18 behindern könnten, vermieden.

Um die Tiefe der Rinne 18, die in funktionaler Hinsicht lediglich bezüglich der inneren Begrenzung der Rinne 18 von Bedeutung ist, einstellen zu können, sind zweite und dritte Ringscheibe 22, 24 höhenverstellbar an der Vorrichtung angebracht. Dazu ist der Maschinenrahmen 62 oberhalb der Trommel 10 mit zwei im wesentlichen in horizontaler Ebene verlaufenden, kreuzförmig angeordneten Trägern 64 versehen, die mit ihren Enden auf vertikalen Ständern 63 des Maschinenrahmens gelagert sind. Im Kreuzungsbereich beider Träger 64 ist eine Halterungsplatte 65 angebracht, an welcher der Antriebsmotor 66 für die beiden Ringscheiben 22, 24 sowie die für die Übertragung der Antriebskräfte erforderlichen Wellen und Getriebeelemente angebracht sind. Im oberen Bereich jedes Ständers 63 ist eine Gewindehülse 68 angebracht, in die ein Gewindebolzen 70 eingreift, der jeweils am Ende jenes Trägers 64 drehbar gelagert ist, der vom jeweiligen Ständer 63 gehalten wird. Da der Gewindebolzen 70 axial unverschiebbar mit dem jeweiligen Träger 64 verbunden ist, hat eine Drehbewegung des Gewindebolzens 70 zwangsläufig eine Höhenverstellung des zugehörigen Trägers 64 zur Folge, da der Ständer 63 Teil des feststehenden Maschinenrahmens ist. Um eine synchrone Betätigung sämtlicher vier Gewindebolzen 70 der beiden Träger 64 zu erreichen, ist jeder der Gewindebolzen 70 mit einem Zahnrad 71 versehen, wobei den Zahnrädern 71 sämtlicher Gewindebolzen 70 eine gemeinsame Kette 72 zugeordnet ist, die innerhalb der Träger 64 geführt ist, die dazu im Kreuzungsbereich mit Umlenk-Zahnrädern 74 versehen sind. Eine Betätigung eines der Zahnräder 71, das dazu mit einem Vierkant versehen ist, hat dann zwangsläufig über die Kette 72 ein gleichmäßiges Anheben oder Absenken der Träger 64 und damit der an diesen hängenden beiden Scheiben 22 und 24 zur Folge.

Der Antrieb der Ringscheibe 14 erfolgt über ein nicht dargestelltes Reibrad, welches mit dem Flansch 35 der Halterung 16 zusammenwirkt. Der Antrieb für das Reibrad kann von dem Antrieb für das der Rinne 18 nachgeordnete Förderband 28 abgeleitet sein, wodurch auch eine Synchronisierung dieser Transportmittel erreicht wird.

Die vertikale Erstreckung des Flansches 20 der zweiten Ringscheibe 22, der die innere Begrenzung der Rinne 18 bildet, muß so gewählt werden, daß bei der am weitesten nach oben verschobenen Lage der zweiten Ringscheibe 22 die Rinne 18 eine Tiefe aufweist, die bei in der Rinne 18 liegendem Körper die größte maximale Querschnittserstreckung bestimmt, die ein Körper aufweisen darf, um in der Vorrichtung noch behandelt werden zu können. Das Ausmaß, um welches die zweite Ringscheibe 22 abgesenkt werden kann, wird durch die Höhe des Flansches 35 am äußeren Umfang der radförmigen Halterung 16 für die Ringscheibe 14 und die Position der stationären Platte 37 bestimmt, die das Wandungsteil 19a trägt. Am nach oben gerichteten, flanschförmigen Fortsatz 35 ist die Ringscheibe 14 befestigt.

Aus den vorbeschriebenen Zusammenhängen ergibt sich, daß zur Anpassung an unterschiedliche Querschnittsformen der Körper 32 und an die Tiefe der Rinne 18, das heißt, an die Höhe von deren innerer Begrenzung, auch die Höhenlage der Abstreifereinrichtung 34 einstellbar sein muß, um die bereits genannte Bedingung zu erfüllen, daß in der Rinne 18 richtig positionierte Körper 32 von der Abstreifereinrichtung 34 nicht aus der Rinne herausbewegt werden, andererseits jedoch ein dar- überbefindlicher Körper von der Abstreifereinrichtung 34 in jedem Fall fasst und aus dem Bereich der Rinne 18 wegbewegt wird. Dazu ist die Abstreifereinrichtung schwenkbar am Maschinenrahmen 62 befestigt (Fig. 4).

Die zu sortierenden Körper, bei denen es sich in der Mehrzahl der Fälle um Behälter aus thermoplastischem Kunststoff handelt, werden ungeordnet in die Trommel 10 gegeben. Dazu kann ein zuförderndes Transportmittel 76 vorgesehen sein. Die Körper, die im folgenden als Flaschen bezeichnet werden, ohne daß damit eine Beschränkung auf Flaschen erfolgen soll, fallen überwiegend auf die Ringscheibe 24, wobei sie aufgrund der von dieser und der Ringscheibe 22 ausgeführten Rotationsbewegungen nach außen gegen die die Begrenzung der Trommel 10 bildenden Wandteile bewegt werden. Dabei erfolgt eine Ausrichtung der Flaschen derart, daß sie im Bereich der Rinne 18 eine Position einnehmen, in welcher ihre Längsachse etwa parallel zu der jeweiligen Tangente verläuft. Die vorbeschriebene Ausrichtung wird durch die geneigten Randbereiche 23 bzw. 25 der beiden Ringscheiben 22 bzw. 24 gefördert. Ferner trägt dazu die Tatsache bei, daß der Übergang von der oberen zur jeweils tieferen Ringscheibe über eine Stufe erfolgt, die von den Fortsätzen 26 bzw. 20 gebildet wird und ebenfalls in Verbindung mit der von den beiden Ringscheiben 22 bzw. 24 geführten Rotationsbewegung zu dem vorbeschriebenen Effekt führt.

Die letzte Phase des Ausrichtvorganges wird häufig im Bereich der Rinne 18 durch die Relativbewegung zwischen dem Umfang der zweiten Ringscheibe 22, dem Körper und der feststehenden Außenwandung 12 erfolgen. Die Flasche wird dabei in die Rinne 18 und somit auf die Ringscheibe 14 fallen, wenn sich an dieser Stelle in der Rinne 18 noch keine Flasche befindet, und dann im Zuge der Rotationsbewegung der Ringscheibe 14 und ggf. auch der zweiten Ringscheibe 22 in Richtung auf den der Rinne 18 nachgeschalteten Bandförderer 28 transportiert. Wenn die Rinne 18 völlig mit derartigen Flaschen ausgefüllt ist, die dann mit ihren stirnseitigen Begrenzungen aneinander anliegen, würden diese Flaschen innerhalb der Rinne 18 eine Art Vieleck bilden, wobei die Anzahl der maximal von der Rinne 18 aufzunehmenden Flaschen abhängt von der Länge der Flaschen. Daraus ergibt sich auch, daß die radiale Erstreckung der Rinne 18, also deren Breite, abhängt von der Länge der Flaschen derart, daß die Rinnenbreite mit zunehmender Flaschenlänge ebenfalls zunehmen muß. Theoretisch wird eine in der Rinne 18 befindliche Flasche, wenn sie nicht sehr unregelmäßig geformt ist, an drei Punkten an den die Rinne 18 begrenzenden Seitenwandungen anliegen, nämlich mit beiden Endbereichen an der äußeren Begrenzung der Rinne und im mittleren Bereich an der inneren Begrenzung, also am flanschartigen Fortsatz 20 der zweiten Ringscheibe 22. Dabei wird im allgemeinen die Länge der Flasche größer sein müssen als ihre maximale Querschnittsabmessung, da im anderen Fall nicht gewährleistet wäre, daß die Flasche die richtige Position in der Rinne 18 einnimmt, bei welcher ihre Längsachse in der bereits erwähnten Weise etwa parallel zu der jeweiligen Tangente an der Rinne 18 verläuft. Das Verhältnis zwischen Länge und maximaler Querschnittsabmessung sollte normalerweise mindestens 1,5 : 1 betragen.

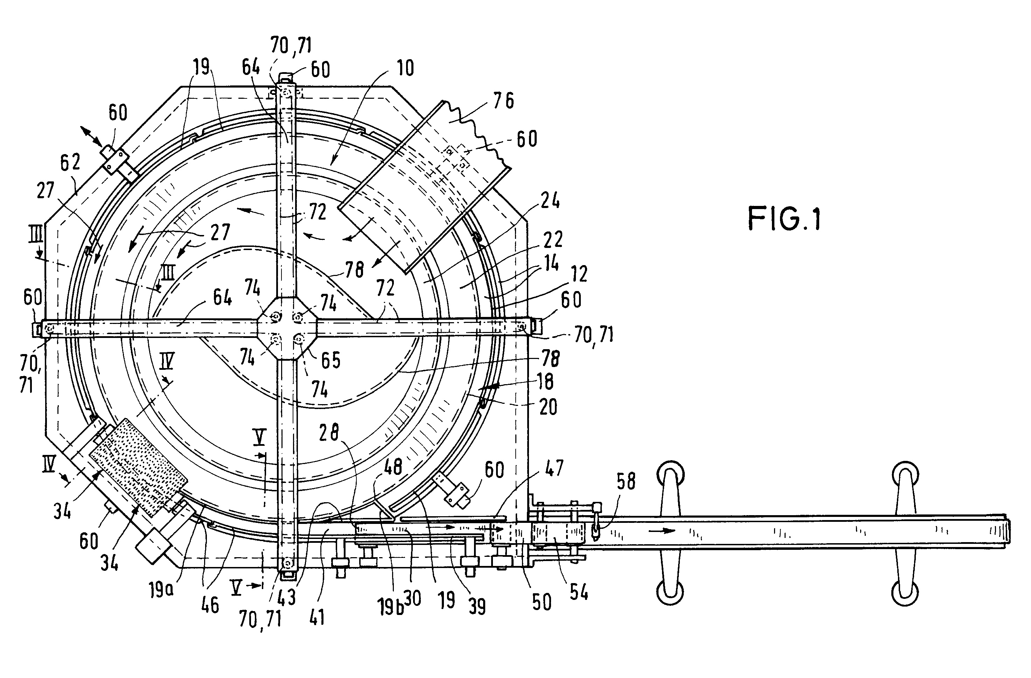

Flaschen, die sich oberhalb einer bereits die richtige Position der Rinne 18 einnehmenden Flasche befinden, werden mehr oder weniger gleichmäßig und einheitlich ebenfalls in Rotationsrichtung 27 transportiert, jedoch vor dem Punkt, an welchem die Rinne im Bereich des Wandungsteiles 19a außerhalb der Trommel 10 verläuft, in der bereits beschriebenen Weise durch die Abstreifereinrichtung 34 entfernt und nach innen in die Trommel 10 zurückgeschleudert. Letztere ist innenseitig mit Führungsblechen 78 versehen, die einerseits die Funktion eines Gehäuses für die von der Halterungsplatte 65 getragenen, nach unten in den Bereich der Trommel 10 hineinragenden Antriebs-und Getriebeteile haben. Zum anderen sind sie aber auch, wie insbesondere Figur 1 erkennen läßt, so angeordnet und ausgebildet, daß der zwischen diesen Führungsblechen 78 und den gegenüberliegenden Wandteilen verfügbare Raum sich in Rotationsrichtung 27 jeweils verkleinert mit der Folge, daß die Flaschen auch durch die Führungsbleche 78 nach außen, also in Richtung auf die Rinne 18 verdrängt werden.

Aufgrund der Tatsache, daß die zweite Ringscheibe 22 mit größerer Geschwindigkeit rotiert als die die Rinne 18 unterseitig begrenzende Ringscheibe 14, erhalten die in der Rinne 18 befindlichen Flaschen noch eine zusätzliche Beschleunigung mit der Folge, daß sie in Rotationsrichtung relativ zur Ringscheibe 14 vorbewegt werden. Dies hat zur Folge, daß die Flaschen normalerweise in unmittelbarer Aufeinanderfolge, also mit ihren stirnseitigen Begrenzungen aneinanderstoßend, auf den Bandförderer 28 gelangen.

Da es im Hinblick auf dem Bandförderer 28 nachgeschalteten Handhabungseinrichtungen erforderlich sein kann, diesen die Flaschen einzeln, also in Abständen zuzuführen, wird der Bandförderer 28 im allgemeinen mit einer Geschwindigkeit umlaufen, die größer ist als die Geschwindigkeit, mit welcher die äußere Ringscheibe 14 rotiert. Die Flaschen erfahren auf dem weiteren Transport eine Ausrichtung derart, daß die stirnseitigen Begrenzungen aller Flaschen die gleiche relative Position einnehmen. D. h., daß der im allgemeinen an jeder Flasche vorhandene Hals bei allen Flaschen in dieselbe Richtung weist. Um dies zu erreichen, ist dem Bandförderer 28 ein weiterer Bandförderer 50 nachgeschaltet, der unter einem Winkel gegenüber der Horizontalen angeordnet ist derart, daß die vom oberen Abschnitt 52 dieses zweiten Bandförderers 50 aufgenommenen Flaschen schräg nach oben transportiert werden. Dem zweiten Bandförderer 50 ist ein dritter Bandförderer 54 zugeordnet, der oberhalb des zweiten Bandförderers 50 in einem solchen Abstand von dessen oberem Abschnitt 52 angeordnet ist, daß sein unterer Abschnitt 56 oberseitig an der auf dem Bandförderer 50 befindlichen Flasche anliegt und diese somit gegen den oberen Abschnitt 52 des zweiten Bandförderers 50 drückt und einklemmt. Diese Einklemmung bewirkt eine Zwangsführung der Flasche, so daß ein störungsfreier Transport unabhängig von der Schrägstellung der beiden Bandförderer 50 und 54 gewährleistet ist, die ohnehin, wie auch der Bandförderer 28, jeweils ein Förderband mit strukturierter Oberfläche aufweisen können, welches die Reibung zwischen Flasche und jeweiligem Förderband erhöht. Die vorerwähnte Zwangsführung im Bereich der beiden Bandförderer 50 und 54 ist darüberhinaus auch deshalb vorteilhaft, weil der Transportvorgang einschließlich der Rotationsbewegungen der Ringscheiben in der Trommel 10 jedenfalls dann häufig unterbrochen wird, wenn die Durchsatzleistung der vorstehend beschriebenen Vorrichtung größer ist als die Durchsatzleistung der dieser nachgeschalteten Maschinen und Einrichtungen. Die Zwangsführung im Bereich der Bandförderer 50 und 52 gewährleistet, daß auch bei Unterbrechungen des Transportvorganges, also bei Abschalten der Bandförderer und ggf. auch der den Boden der Trommel bildenden Ringscheiben, die im Bereich der beiden Bandförderer 50 und 54 befindliche Flasche(n) in jedem Fall ihre Position beibehält bzw. beibehalten, und zwar auch dann, wenn beispielsweise eine von den Bandförderern 50 und 54 noch gehaltene Flasche bereits mit ihrem in Transportrichtung vorderen Abschnitt über die beiden Bandförderer hinausragt und sich mit diesem vorderen Abschnitt im Bereich einer Schlaufe 58 befindet. Die Tatsache, daß eine in einer solchen Position befindliche Flasche mit ihrem hinteren Abschnitt immer noch zwischen den beiden Bandförderer 50 und 54 eingeklemmt ist, hat zur Folge, daß diese Flasche bis zum erneuten Anlaufen der Bandförderer ihre Position beibehält. D. h., daß auch in diesem schräg nach oben verlaufenden Förderweg im Bereich der Bandförderer 50 und 54 bezüglich der von den Flaschen eingenommenen Positionen immer eindeutig definierte Verhälntisse vorliegen.

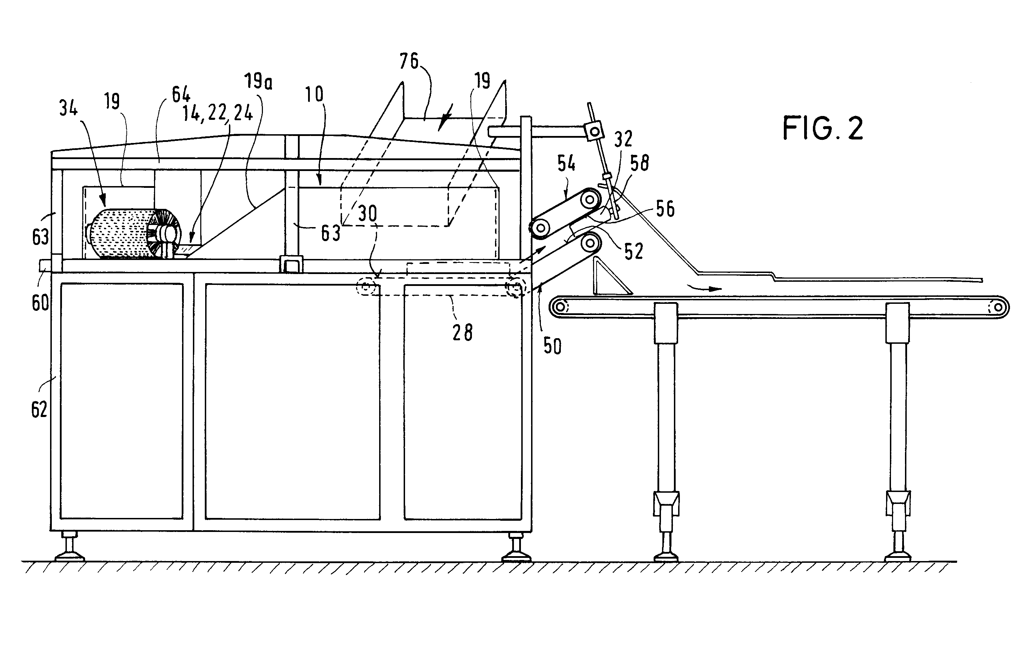

Am Ende dieses durch die beiden Bandförderer 52, 56 definierten, schräg nach oben gerichteten Transportweges ist die Schlaufe 58 angeordnet, die in den Transportweg der die beiden Bandförderer 52, 54 verlassenden Flasche hineinragt derart, daß, wie dies in Fig. 2 der Zeichnung dargestellt ist, bei in Transportrichtung der Flasche vorn befindlichem Flaschenhals dieser in die Schlaufe eingreift mit dem Ergebnis, daß die Flasche von der Schlaufe erfaßt und im Zuge der weiteren Transportbewegung um den Flaschenhals verschwenkt wird derart, daß der Flaschenhals nach hinten weist und der vor der durch die Schlaufe 58 bewirkten Schwenkbewegung in Transportrichtung hinten befindliche Flaschenboden nach der Schwenkbewegung in Transportrichtung vorne liegt. Der schräg nach oben gerichtete Verlauf der beiden Bandförderer 50 und 54 ist auch für die Schwenkbewegung vorteilhaft, weil dadurch die Flasche zu Beginn der Schwenkbewegung bereits eine Schrägstellung einnimmt, die die durch die Schlaufe noch zu bewirkende Schwenkbewegung verkürzt. Dies kommt der Produktivität der Einrichtung zugute, zumal mit zunehmender Länge der Flasche die Schwenkbewegung ohnehin länger dauern wird. Dies kann dadurch kompensiert werden, daß mit zunehmender Länge der Flaschen die beiden Bandförderer 50 und 54 steiler gestellt werden, um so eine entsprechende Verkürzung der Schwenkbewegung zu erreichen. - Schließlich dienen die schräggestellten Bandförderer 50 und 54 auch dazu, die für den an die Schwenkbewegung anschließenden Transport notwendige Höhe beizubehalten. Im allgemeinen wird die Höhe, in welcher die Flaschen nach Passieren der Schlaufe weitertransportiert werden, durch anschließende Maschinen zum behandeln und Handhaben der Flaschen festgelegt. Mit Hilfe der schräg nach oben verlaufenden Bandförderer 50, 54 besteht die Möglichkeit, auch hierbei unterschiedliche Flaschenlängen zu berücksichtigen. Mit zunehmender Länge der Flasche werden die beiden Bandförderer 50, 54 steiler eingestellt mit der Folge, daß die Schlaufe entsprechend höher anzuordnen ist. Dies hat einen größeren Freiraum unterhalb der Schlinge für die Durchführung der Schwenkbewegung zur Folge.

Flaschen, die bereits mit nach hinten weisendem Flaschenhals durch die beiden Bandförderer 52, 54 zutransportiert werden, erfahren keine Verschwenkung, da die Schlaufe 58 zu klein ist, als daß das bodenseitige Ende der Flasche, welches einen größeren Durchmesser aufweist als der Flaschenhals, mit der Schlinge 58 in Eingriff kommen könnte. Derartige Einrichtungen zur Erzielung einer einheitlichen Ausrichtung sind bekannt, so daß sie keiner näheren Beschreibung bedürfen. Bei an einem Ende eine größere Öffnung aufweisenden, z.B. becherartigen Behältern wird anstelle der Schlinge im allgemeinen ein Haken verwendet, der in die Öffnung eingreift.

Die Relationen zwischen den Rotationsgeschwindigkeiten der drei Ringscheiben 14, 22, 24 können etwa 0,75 : 1,0 : 1,5 betragen, wobei die Trommel 10 einen Durchmesser von beispielsweise 1,5 m aufweist. Die Rotationsgeschwindigkeit der unteren Ringscheibe 14 kann beispielsweise zwischen 2 U/min. - 10 U/min. liegen.

Im allgemeinen wird die Geschwindigkeit, mit welcher die Körper in der Rinne 18 vortransportiert werden, nicht wesentlich geringer sein als die Umfangsgeschwindigkeit der Ringscheibe 14 im Bereich der Rinne 18. Im übrigen können zur Vermeidung von unzulässigen Beanspruchungen der Körper insbesondere durch Reibung die Wandung 12 innenseitig und ggf. auch die beiden oberen Ringscheiben 22 und 24 in dem Bereich, in dem sie mit dem Körper in Berührung kommen, mit einem stoßdämpfenden weichen Belag aus Textil oder dgl. versehen sein.

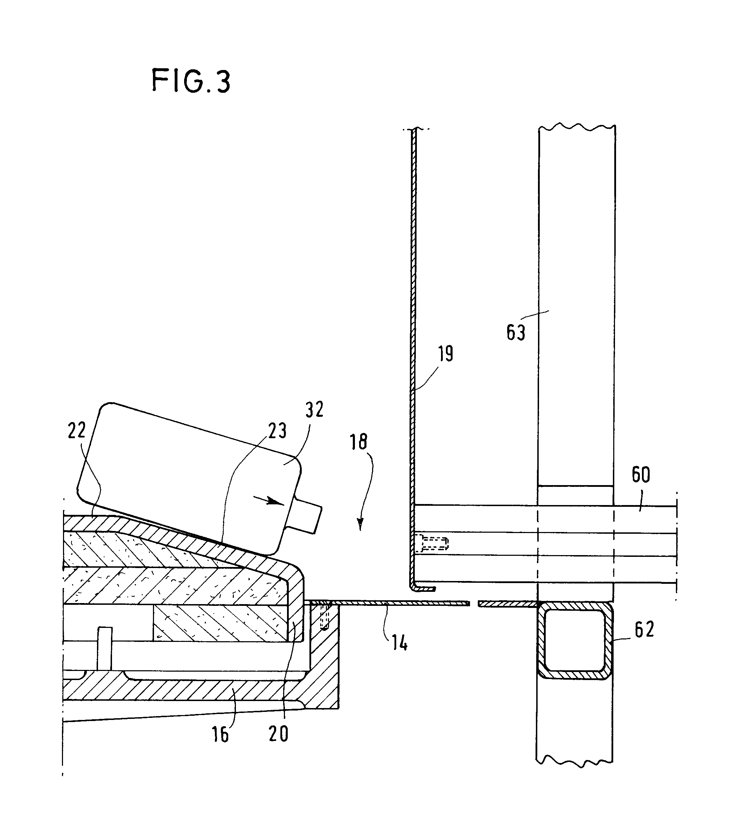

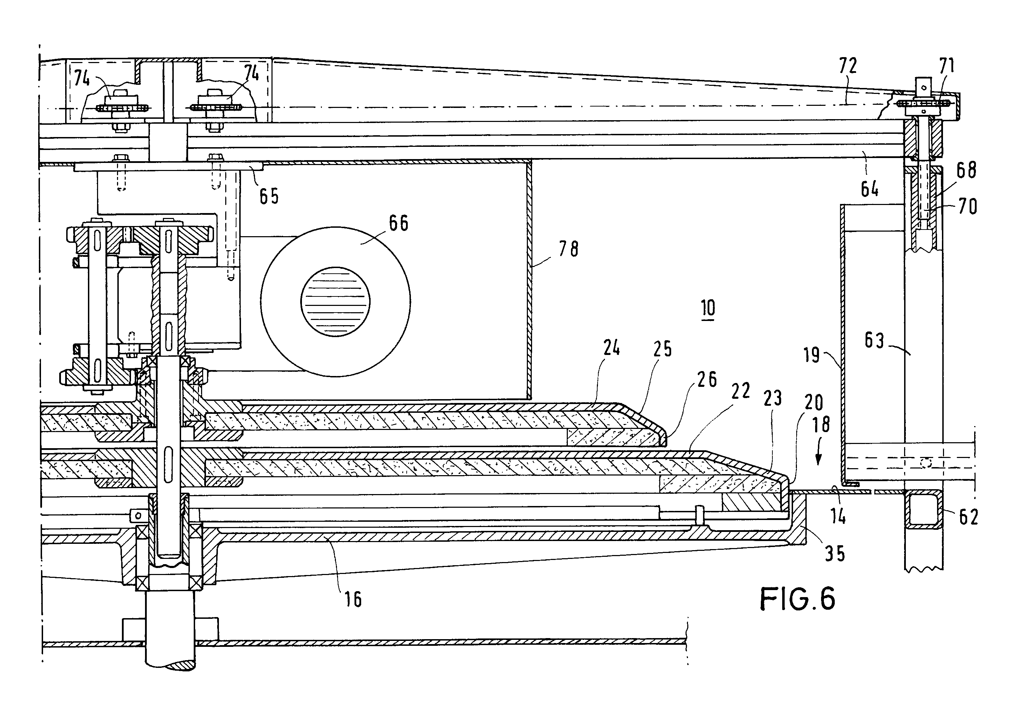

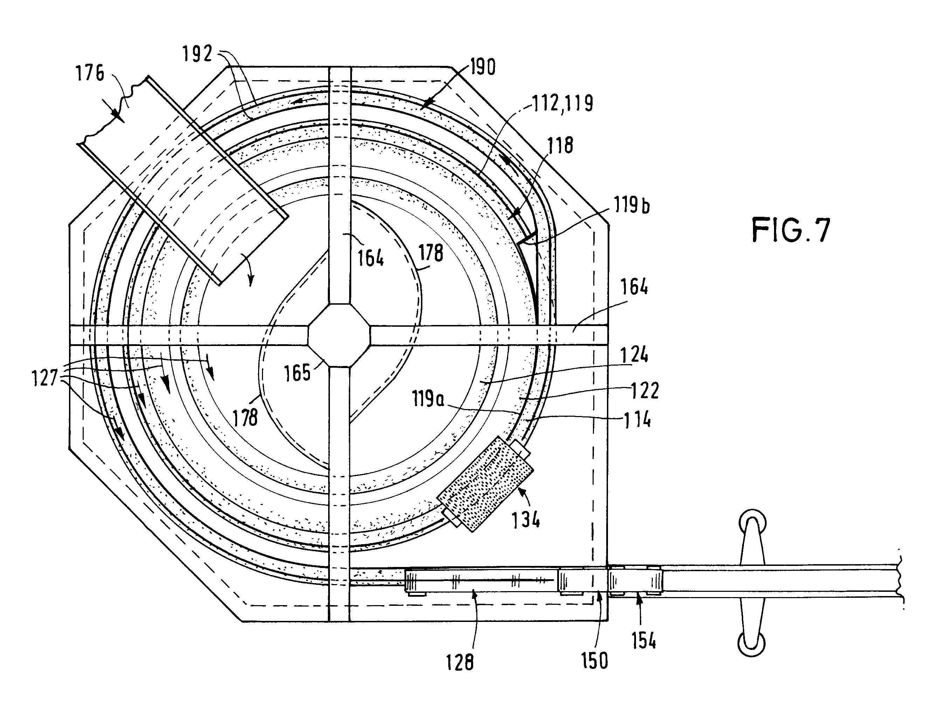

Das Ausführungsbeispiel gemäß Fig. 7 stimmt mit dem gemäß den Fig. 1 - 6 in allen wesentlichen Einzelheiten überein, so daß auch für gleiche Teile gleiche, jedoch um 100 höhere Bezugszeichen verwendet werden. Der einzige Unterschied besteht darin, daß die außenseitig überwiegend von der Wandung 112 begrenzte Rinne 118 in Rotationsrichtung 127 der Ringscheiben hinter der Abstreifereinrichtung 134 in eine zweite Rinne 190 übergeht, die beidseitig von Führungsmitteln 192 und unterseitig von der ersten, dazu mit einem entsprechenden Außendurchmesser versehenen Ringscheibe 114 begrenzt ist, die auch die überwiegend innerhalb der Trommel 110 verlaufende Rinne 118 unterseitig begrenzt. Demzufolge leitet das Wandteil 119a, welches in Rotationsrichtung 127 im unmittelbaren Anschluß an die Abstreifereinrichtung 134 die Rinne 118 innenseitig begrenzt, in die zweite, außerhalb der Trommel 110 verlaufende Rinne 190 über, wobei das Wandteil 119a die gleiche Funktion hat wie im Falle des Ausführungsbeispiels gemäß den Fig. 1 - 6, nämlich das Abschirmen des Abschnittes der Rinne 190, der unmittelbar an die Abstreifereinrichtung 134 anschließt, gegenüber den in der Trommel 110 befindlichen Körpern. Demzufolge verläuft auch das Querwandteil 119b zwischen dem Wandteil 119a und dem innenseitigen Führungsmittel 192 der äußeren Rinne 190. Zumindest das äußere Führungsmittel 192, das im allgemeinen analog dem Teil 46 (Fig. 4) leistenförmig ausgebildet sein wird, kann analog den Wandteilen der Trommel 110 in Abschnitte unterteilt sein, die zur Anpassung an die Dimensionen der durchzusetzenden Körper einstellbar angebracht sind. - Abweichend von der vorbeschriebenen Ausgestaltung kann die Rinne 190 unterseitig auch durch ein von der ersten Ringscheibe 114 unabhängiges, zusätzliches Fördermittel, z. B. eine weitere Ringscheibe, ein Kurvenband oder dgl. begrenzt sein

An die äußere Rinne 190 schließt dann das Förderband 128 an, welches die in einer Reihe liegend transportierten Körper den beiden schräg nach oben verlaufenden Förderbändern 150, 154 zuführt, die der Schlaufe zugeordnet sind. Der Vorteil der Ausführungsform gemäß Fig. 7 besteht darin, daß durch die äußere Rinne 190 zusätzliche Speicherkapazität für bereits ausgerichtete Körper geschaffen wird, ohne daß dazu lineare Transportwege erforderlich sind. Vielmehr wird die Gesamtvorrichtung lediglich einen etwas größeren Durchmesser aufweisen. Dies fällt jedoch in Anbetracht der ohnehin kompakten Bauweise der Vorrichtung kaum ins Gewicht.

## Patentansprüche

1. Vorrichtung zum Ausrichten von ungeordnet zugeführten Körpern, insbesondere Hohlkörpern aus Kunststoff, mit einer Trommel, die unterseitig durch einen Boden begrenzt ist, der um eine im wesentlichen vertikale Achse rotierbar ist, dadurch gekennzeichnet, daß der Boden der Trommel (10) wenigstens zwei koaxiale Scheiben oder Ringscheiben (14, 22) aufweist, die unabhängig voneinander rotierbar und übereinander angeordnet sind, und die erste, zuunterst befindliche Scheibe oder Ringscheibe (14) den größeren Außendurchmesser aufweist und die zweite, darüber befindliche Scheibe oder Ringscheibe (22) mit wenigstens einem Teil ihres äußeren Umfangs (20) die innere Begrenzung einer Rinne (18) bildet, deren unterseitige Begrenzung von der ersten Scheibe (14) und deren außenseitige Begrenzung durch eine stationäre Wandung (12) gebildet wird, wobei die radiale Breite der Rinne (18), die durch den Abstand zwischen dem äußeren Umfang (20) der zweiten oberen Ringscheibe (22) und der äußeren Wandung (12) definiert ist, an die Gestalt der auszurichtenden Körper (32) angepaßt ist derart, daß über die Breite der Rinne (18) nur ein Körper (22) von der Rinne (18) aufgenommen werden kann, und in Transportrichtung hinter einem oberhalb der Rinne (18) angeordneten Abstreifmittel (34), welches Körper (32), die im Bereich der Rinne (18) oberhalb eines in der Rinne befindlichen Körpers liegen, in Richtung auf das Innere der Trommel (10) wegbewegt, ohne jedoch Körper (32), die innerhalb der Rinne (18) ihre richtige Position einnehmen, zu entfernen, ein Abschnitt der Rinne (18) innenseitig durch ein stationäres Wandteil (19a) begrenzt ist, das diesen Abschnitt der Rinne gegenüber dem Inneren der Trommel (10) abschirmt, und die ausgerichteten Körper durch zumindest einen Teilabschnitt des abgeschirmten Abschnittes der Rinne (18) aus der Trommel (10) herausgeführt werden.

2. Vorrichtung nach Anspruch 1, dadurch gekennzeichnet, daß der äußere Umfang der zweiten Scheiben oder Ringscheibe (22) einen im wesentlichen parallel zur Drehachse verlaufenden, nach unten gerichteten flanschartigen Fortsatz (20) aufweist, um die Rinne (18) innen zu begrenzen.

3. Vorrichtung nach Anspruch 1, dadurch gekennzeichnet, daß oberhalb der zweiten Scheibe oder Ringscheibe (22) eine dritte Scheibe oder Ringscheibe (24) koaxial zu den anderen beiden Scheiben oder Ringscheiben (14, 22) angeordnet ist, deren Außendurchmesser kleiner ist als der der zweiten Scheibe oder Ringscheibe (22).

4. Vorrichtung nach einem der vorhergehenden Ansprüche, dadurch gekennzeichnet, daß der äußere Randbereich der Oberseite der zweiten und/oder der dritten Scheibe oder Ringscheibe (22 bzw. 24) nach unten geneigt verläuft.

5. Vorrichtung nach Anspruch 4, dadurch gekennzeichnet, daß die Oberseite der dritten Scheibe oder Ringscheibe (24) sich an ihrem äußeren Umfang in einem Abstand von der darunter befindlichen Oberseite der zweiten Scheibe (22) befindet.

6. Vorrichtung nach Anspruch 5, dadurch gekennzeichnet, daß die dritte Scheibe oder Ringscheibe (24) an ihrem äußeren Umfang mit einem sich nach unten erstreckenden flanschförmigen Fortsatz versehen ist.

7. Vorrichtung nach Anspruch 1, dadurch gekennzeichnet, daß die die Rinne (18) innenseitig begrenzende zweite Scheibe oder Ringscheibe (22) bezüglich ihrer Höhenlage verstellbar ist, um so die Höhe der die Rinne (18) innenseitig begrenzenden Seitenwandung, die vom Umfang der zweiten Scheibe oder Ringscheibe gebildet wird, in Abhängigkeit von der Größe und der Ausgestaltung der Körper (32) einstellen zu können.

8. Vorrichtung nach Anspruch 3 und 7, dadurch gekennzeichnet, daß die dritte Scheibe oder Ringscheibe (24) entsprechend der zweiten Scheibe oder Ringscheibe (22) bezüglich ihrer Höhenlage verstellbar ist, wobei beide Scheiben oder Ringscheiben von einer gemeinsamen Halterung (65) getragen sein können .

9. Vorrichtung nach Anspruch 1 oder 3, dadurch gekennzeichnet, daß sämtliche Scheiben bzw. Ringscheiben (14, 22, 24) in derselben Richtung (27) rotieren und die Rotationsgeschwindigkeit einer Scheibe bzw. Ringscheibe größer ist als die der jeweils unmittelbar darunter befindlichen Scheibe oder Ringscheibe.

10. Vorrichtung nach Anspruch 1, dadurch gekennzeichnet, daß die die Rinne (18) außenseitig begrenzende Wandung (12) von mehreren in Umfangsrichtung hintereinander angeordneten Wandungsteilen (19) gebildet wird, die wenigstens in den Bereich, in welchem der Umfang der zweiten Scheibe oder Ringscheibe (22) die innere Begrenzung der Rinne bildet, zur Anpassung der radialen Breite der Rinne (18) an die Gestalt der auszurichtenden Körper (32) im wesentlichen in Richtung auf den Mittelpunkt der Trommel (10) und entgegengesetzt dazu einstellbar angebracht sind.

11. Vorrichtung nach Anspruch 1, dadurch gekennzeichnet, daß zu der innenseitig durch den flanschförmigen Fortsatz (20) der zweiten Scheibe bzw. Ringscheibe (22) begrenzten Rinne (18) im wesentlichen koaxial außenseitig eine zweite Rinne angeordnet ist, die eine Fortsetzung der ersten Rinne (18) bildet, unterseitig durch eine in Transportrichtung rotierbare Ringscheibe und innen- und außenseitig durch stationäre Führungsteile begrenzt ist.

12. Vorrichtung nach Anspruch 10, dadurch gekennzeichnet, daß die die unterseitige Begrenzung der zweiten Rinne durch die Scheibe bzw. Ringscheibe (14) gebildet ist, die auch die unterseitige Begrenzung der ersten Rinne (18) bildet.

13. Vorrichtung nach Anspruch 1, dadurch gekennzeichnet, daß das Abstreifmittel (34) als rotierende Bürste (36) ausgebildet ist, deren Rotationsachse etwa tangential zu einem Kreis angeordnet ist, der durch die Rinne (18) definiert wird, wobei die Bewegungsbahn der freien Enden der die Bürste bildenden Borsten (38) so verläuft, daß ein in der richtigen Position in der Rinne (18) befindlicher Körper (32) vom Abstreifmittel (34) nicht entfernt wird.

14. Vorrichtung nach Anspruch 1, dadurch gekennzeichnet, daß das Abstreifmittel (34) bezüglich seines Abstandes von der Rinne (18) einstellbar ist.

15. Vorrichtung nach Anspruch 1, dadurch gekennzeichnet, daß ein die ausgerichteten Körper von der Rinne (18) übernehmendes Fördermittel (28) an den Bereich der Rinne (18) anschließt, welcher durch das stationäre Wandteil (19a) gegenüber der Trommel (10) abgeschirmt ist.

16. Vorrichtung nach Anspruch 1, dadurch gekennzeichnet, daß das die ausgerichteten Körper (32) übernehmende Fördermittel ein Bandförderer (28) ist, der etwa tangential an die Rinne (18) anschließt.

17. Vorrichtung nach Anspruch 1, dadurch gekennzeichnet, daß die die Rinne (18) unterseitig begrenzende Scheibe oder Ringscheibe (14) einen Innendurchmesser aufweist, der größer ist als der Außendurchmesser der zweiten Scheibe oder Ringscheibe (22), und so gehalten ist, daß entlang ihrem inneren Umfang (49) ein Raum zur Aufnahme des Umfangs der zweiten Ringscheibe (22) vorhanden ist.

18. Vorrichtung nach Anspruch 1, dadurch gekennzeichnet, daß der Transportbahn, welcher die Körper (32) nach Verlassen der Trommel (10) folgen, schwenkbar angebrachte Mittel zugeordnet sind, die in die Transportbahn hineinragen und in Abhängigkeit von der Beschaffenheit des in Transportrichtung vorderen Endes des Körpers (32) mit diesem in Eingriff kommen, um eine Schwenkbewegung des Körpers zu bewirken derart, daß nach dieser Schwenkbewegung der Körper eine Position einnimmt, in welcher jenes Ende, welches vor der Schwenkbewegung in Transportrichtung hinten lag, sich nunmehr in Transportrichtung vorne befindet.

19. Vorrichtung nach Anspruch 18, dadurch gekennzeichnet, daß das in die Bewegungsbahn des Körpers (32) hineinragende Mittel am Ende eines nach oben gerichteten Abschnittes der Transportbahn angeordnet ist.

20. Vorrichtung nach Anspruch 19, dadurch gekennzeichnet, daß der nach oben gerichtete Abschnitt der Bewegungsbahn der Körper von zwei Bandförderern (50, 52) gebildet ist, die übereinander angeordnet sind derart, daß der zu transportierende Körper (32) zwischen den beiden einander zugekehrten Abschnitten (52, 56) Trumen der Bandförderer eingeklemmt ist.
